Europäisches Patentamt

European Patent Office

Office européen des brevets

(11) Publication number: **0 161 202**
**B1**

## EUROPEAN PATENT SPECIFICATION

(45) Date of publication of patent specification: **03.01.90**

(51) Int. Cl.⁵: **B 60 C 9/28,** B 60 C 9/04

(21) Application number: **85630068.6**

(22) Date of filing: **30.04.85**

(54) A pneumatic tire.

(30) Priority: **07.05.84 US 607884**

(43) Date of publication of application:
**13.11.85 Bulletin 85/46**

(45) Publication of the grant of the patent:
**03.01.90 Bulletin 90/01**

(84) Designated Contracting States:
**DE FR GB IT**

(56) References cited:
**DE-B-1 505 108**
**DE-U-7 709 502**
**FR-A-2 380 907**

(73) Proprietor: **THE GOODYEAR TIRE & RUBBER
COMPANY
1144 East Market Street
Akron, Ohio 44316-0001 (US)**

(72) Inventor: **Schmit, Georges Jean
35, Allee St. Hubert
L-8138 Bridel (LU)**

(74) Representative: **Weyland, J.J. Pierre
Goodyear Technical Center-Luxembourg
L-7750 Colmar-Berg (LU)**

Courier Press, Leamington Spa, England.

## Description

### Background of the Invention

This invention relates to radial carcass tires, and in particular to radial carcass tires for use on aircraft. It is believed that in radial carcass tires the tension on the carcass reinforcing cords is lower in the crown portion of the tire than in the sidewall portions of the tire. Conventional radial carcass tires have reinforcing plies that extend continuously and uninterrupted from one bead portion of the tire to the other bead portion of the tire. However, it is known to manufacture radial carcass tires having carcass reinforcing layers that comprise a plurality of discontinuous plies. As used herein, a "discontinuous ply" is a ply of reinforcing cords that is anchored around only one bead core of the tire.

In the prior art, for example, FR Patent 2,380,907 and German Patent 1,505,108, describe radial carcass tires in which the carcass reinforcing cords do not extend continuously from one bead portion of the tire to the other bead portion of the tire. In each of these documents, there is illustrated a tire carcass having two layers of reinforcing cords comprising two discontinuous plies each, with each of the discontinuous plies extending from a bead portion of the tire into the crown portion of the tire. In German Patent 1,505,108, the two discontinuous plies overlap causing an irregularity. In French Patent 2,380,907, the two discontinuous plies are axially spaced apart beneath the tread reinforcing belt by a gap having a width in excess of one-half of the axial width of the tread reinforcing belt, thereby necessitating the use of an extra support layer to interconnect the two discontinuous plies of each carcass reinforcing layer.

The present invention provides a radial carcass tire having a carcass comprising two layers of reinforcing cords each of which does not extend continuously from one bead portion of the tire to another, and which does not have the disadvantages of the prior art tires of this type.

### Summary of the Invention

There is provided in accordance with the invention, a radial aircraft tire as further specified in appended claim 1.

For the purpose of this invention, the terms "radial" and "radially" refer to directions perpendicular to the axis of rotation of a tire, and the terms "axial" and "axially" refer to directions parallel to the axis of rotation of a tire.

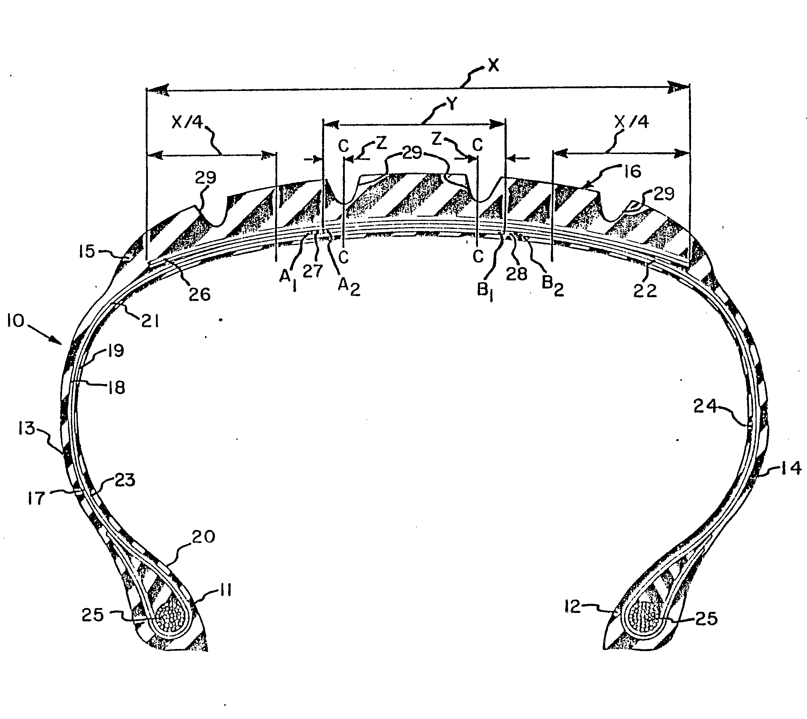

### Brief Description of the Drawing

The invention will be described with reference to the sole figure of the drawing which illustrates a radial cross-section through a radial carcass tire according to the invention.

### Detailed Description of the Invention

With reference to the accompanying drawing, there is illustrated a radial cross-section through a radial carcass tire 10. The tire 10 illustrated in the drawing is an aircraft tire, but it is believed the invention may be practiced advantageously in tires for other applications also. The tire 10 has a pair of annular bead portions 11 and 12 for engaging the bead seats and flanges of a rim (not shown). Each annular bead portion contains a substantially inextensible annular bead core 25. A sidewall 13, 14 extends radially outwardly from each respective bead portion. The two sidewalls 13,14 are interconnected by the crown portion 15 of the tire. The crown portion 15 has a ground-engaging tread portion 16 extending circumferentially thereabout.

The tire 10 has a radial carcass 17 comprising two carcass layers 18 and 19 reinforced by cords of a suitable material, preferably by cords of a low elongation material, such as an aromatic polyamide. Other possible materials for the reinforcing cords of the carcass layers are steel wire, fiberglass, and rayon. The cords in each carcass layer are parallel to each other and are oriented at an angle of between 75° and 90° with respect to the mid-circumferential plane of the tire. The radially inner carcass layer 19 comprises two discontinuous plies 23 and 24 and the radially outer carcass layer 18 comprises two discontinuous plies 21 and 22. The crown portion 15 is further reinforced by a circumferentially extending tread reinforcing belt structure 26 disposed between the radially outer carcass layer and the ground-engaging tread portion 16. Each of the discontinuous plies 21, 22, 23 and 24 is anchored around only a single bead core 25 and extends through a respective sidewall 13' or 14 into the crown portion 15 where it axially overlaps with the tread reinforcing belt a distance X/4 which is equal to not less than one-fourth of the axial width X of the tread reinforcing belt structure 26. The radially outermost ends $B_1$ and $B_2$ of the discontinuous plies 23 and 24 of the radially inner carcass layer 19 have a discontinuity therebetween that could be in the form of an abutment surface but preferably is in the form of a circumferentially extending gap 28. The radially outermost ends $A_1$ and $A_2$ of the discontinuous plies 21 and 22 of the radially outer carcass layer 18 are likewise axially spaced apart by a circumferentially extending gap 27 but could also be in abutment, as described above for $B_1$ and $B_2$. The gaps 27 and 28 between the discontinuous plies of the two carcass layers are axially offset relative to each other and do not axially overlap one another. In the preferred embodiment of the invention, the gaps between the discontinuous plies of the carcass layers are axially offset by a distance Y which is equal to not less than one-fourth of the axial width X of the tread reinforcing belt structure, and more preferably by distance which is equal to between 30 percent and 37 percent of the axial width X of the tread reinforcing belt structure. The gaps 27 and 28 between each pair of discontinuous plies can each have substantially the same axial width of up to 10 percent of the axial width X of the tread reinforcing belt structure, preferably the gaps have an axial width of no greater than 4 percent of the axial width of the tread reinforcing belt structure.

The tread portion 16 has a plurality of axially spaced apart circumferentially extending straight grooves 29 formed in its ground contacting surface. The grooves 29 are arranged such that the axial centerline C-C of any groove is axially spaced apart from the circumferentially extending gaps 27, 28 between the discontinuous plies of each carcass layer. The distance Z between the axial centerline C—C of any tread groove 29 and each said gap 27, 28 should preferably be a distance of at least 2 percent of the axial width X of the tread reinforcing belt structure, and more preferably no less than 4 percent of the axial width X of the tread reinforcing belt structure.

It is believed to be desirable to offset the gaps between the discontinuous plies not only with respect to one another, but also with respect to the tread grooves, in order to prevent the concentration of stresses as a tire passes through its footprint during use.

The tread reinforcing belt structure 26 comprises a plurality of plies of substantially parallel reinforcing cords. The reinforcing cords are most preferably a low elongation material, such as an aromatic polyamide, but could be steel wires or any other suitable material. The reinforcing cords of each ply of the tread reinforcing belt structure are parallel to one another and oriented at an angle of between 10° and 30° with respect to the mid-circumferential centerplane of the tire. The tread reinforcing belt structure 26 may be of any type suitable for use in radial tire construction, for example, a number of folded plies, a number of unfolded plies, or a combination of folded and unfolded plies.

One advantage of manufacturing a tire with a carcass comprising two carcass layers of discontinuous plies is that during tire building the tolerance on the placement of the bead cores is looser than for tires having carcass layers comprising cords which extend continuously from one bead portion of the tire to another bead portion of the tire. This advantage is particularly important when building tires having carcass layers reinforced by low elongation materials like aromatic polyamide fibers and steel cords.

Furthermore, with a low elongation material, such as an aromatic polyamide, the carcass cords are not subject to excessive strains during the service life of the tire, because the elastomeric material in the gaps between the radially outer ends of the discontinuous plies dissipates the strain in the discontinuous plies.

## Claims

1. A radial aircraft tire (10) comprising a pair of annular bead portions (11, 12), each annular bead portion containing an annular bead core (25), a sidewall (13, 14) extending radially outwardly from each bead portion (11, 12), and a crown portion (15) extending between the sidewalls with a ground-engaging tread portion (16) extending circumferentially thereabout, said tread portion (16) having a plurality of axially spaced apart circumferentially extending straight grooves therein, a carcass consisting of two reinforced radial carcass layers (18, 19) and a tread reinforcing belt structure (26) disposed radially outwardly of the carcass layers (18,19) in said crown portion (15), each of said carcass layers (18, 19) comprising two discontinuous plies (21, 22; 23, 24) of radial reinforcing cords with each of said discontinuous plies being anchored around one of said cores (25) and extending through a sidewall (13, 14) into said crown portion (15) in overlapping relationship with the tread reinforcing belt structure (26), characterized in that the carcass plies overlap with the tread reinforcing belt structure (26) by a distance equal to at least one-fourth of the axial width (X) of the tread-reinforcing belt structure (26), the two discontinuous plies of each carcass layer (21, 22; 23, 24) have an axial gap (27, 28) with an axial width of no greater than 10 percent of the axial width (X) of said tread reinforcing belt structure (26) therebetween, the carcass layers (18, 19) being arranged such that the axial gap (27, 28) between the discontinuous plies of each layer is axially offset from and does not overlap with the axial gap between the discontinuous plies of the other carcass layer, and in that the axial gaps (27, 28) between the discontinuous plies (21, 22; 23, 24) of each carcass layer (18, 19) are axially spaced apart from the axial centerline (C—C) of the grooves (29) in said tread portion (16) by a distance (Z) equal to at least 2 percent of the axial width (X) of said tread reinforcing belt structure (26).

2. A radial tire (10) as claimed in Claim 1 characterized in that the axial gap between the discontinuous plies of one carcass layer is axially offset relative to the axial gap between the discontinuous plies of every other carcass layer by a distance equal to not less than one-fourth of the axial width (X) of the tread reinforcing belt structure (26).

3. A radial tire as claimed in Claim 1 characterized in that the axial gap between the discontinuous plies of one carcass layer is axially offset relative to the axial gap between the discontinuous plies of every other carcass layer by a distance of between 30 percent and 37 percent of the axial width (X) of the tread reinforcing belt structure (26).

4. A radial tire as claimed in any one of Claims 1, 2 or 3 characterized in that the axial gaps (27, 28) between the discontinuous plies of the carcass layers (18, 19) have the same axial width, the axial widths of said gaps being no greater than 4 percent of the axial width (X) of the tread reinforcing belt structure (26).

5. A radial tire as claimed in any one of Claims 1, 2 or 3 characterized in that the reinforcing cords of said discontinuous plies (21, 22; 23, 24) comprise an aromatic polyamide.

**Patentansprüche**

1. Gürtelreifen (10) für ein Flugzeug, mit einem Paar von ringförmigen Wulstabschnitten (11, 12), wobei jeder ringförmige Wulstabschnitt einen ringförmigen Wulstkern (25) aufweist, mit einer Seitenwand (13, 14), die sich radial nach außen von jedem der Wulstabschnitte (11, 12) erstreckt, mit einem Kronenabschnitt (15), der sich zwischen den Seitenwänden erstreckt, wobei sich ein an dem Boden angreifender Laufflächenabschnitt (16) in Umfangsrichtung um diesen erstreckt, wobei der Laufflächenabschnitt (16) eine Vielzahl von in Axialrichtung beabstandeten, sich in Umfangsrichtung erstreckenden geradlinigen Rillen aufweist, mit einer Karkasse bestehend aus zwei verstärkten radialen Karkassenlagen (18, 19) und mit einem Laufflächenverstärkungsgürtelaufbau (26), der radial außerhalb der Karkassenlagen (18, 19) in dem Kronenabschnitt (15) angeordnet ist, wobei jede der Karkassenlagen (18, 19) zwei nicht zusammenhängende Lagen (21, 22; 23, 24) aus radialen Verstärkungskorden aufweist, wobei jede der nicht zusammenhängenden Lagen um einen der Kerne (25) verankert ist und sich durch eine Seitenwand (13, 14) in den Kronenabschnitt (15) hinein überlappend mit dem Laufflächenverstärkungsgürtelaufbau (26) erstreckt, dadurch gekennzeichnet, daß die Karkassenlagen den Laufflächenverstärkungsgürtelaufbau (26) um eine Länge überlappen, die gleich ist wenigstens einem Viertel der axialen Breite (X) des Laufflächenverstärkungsgürtelaufbaus (26), daß die beiden nicht zusammenhängenden Lagen (21, 22; 23, 24) jeder Karkassenlage einen axialen Spalt (27, 28) mit einer axialen Breite von nicht mehr als 10% der axialen Breite (X) des Laufflächenverstärkungsgürtelaufbaus (26) zwischen sich aufweisen, daß die Karkassenlagen (18, 19) derart angeordnet sind, daß der axiale Spalt (27, 28) zwischen den nicht zusammenhängenden Lagen jeder Lage axial versetzt zu dem axialen Spalt zwischen den unterbrochenen Lagen der anderen Karkassenlage sind und diesen nicht überlappt, und daß die axialen Spalte (27, 28) zwischen den nicht zusammenhängenden Lagen (21, 22; 23, 24) jeder Karkassenlage (18, 19) in Axialrichtung einen Abstand (Z) von der axialen Mittellinie (C—C) der Rillen (29) in dem Laufflächenabschnitt (16) aufweisen, der gleich ist wenigstens 2% der axialen Breite (X) des Laufflächenverstärkungsgürtelaufbaus (26).

2. Gürtelreifen (10) nach Anspruch 1, dadurch gekennzeichnet, daß der axiale Spalt zwischen den nicht zusammenhängenden Lagen einer Karkassenlage in Axialrichtung versetzt ist gegenüber dem axialen Spalt zwischen den nicht zusammenhängenden Lagen jeder anderen Karkassenlage um einen Abstand, der gleich ist von nicht weniger als einem Viertel der axialen Breite (X) des Laufflächenverstärkungsgürtelaufbaus (26).

3. Gürtelreifen nach Anspruch 1, dadurch gekennzeichnet, daß der axiale Spalt zwischen den nicht zusammenhängenden Lagen einer Karkassenlage in Axialrichtung versetzt ist gegenüber dem axialen Spalt zwischen den nicht zusammenhängenden Lagen jeder anderen Karkassenlage um einen Abstand von 30% bis 37% der axialen Breite (X) des Laufflächenverstärkungsgürtelaufbaus (26).

4. Gürtelreifen nach einem der Ansprüche 1, 2 oder 3, dadurch gekennzeichnet, daß die axialen Spalte (27, 28) zwischen den nicht zusammenhängenden Lagen der Karkassenlagen (18, 19) die gleiche axiale Breite aufweisen und daß die axiale Breite der Spalte nicht größer als 4% der axialen Breite (X) des Laufflächenverstärkungsgürtelaufbaus (26) ist.

5. Gürtelreifen nach einem der Ansprüche 1, 2 oder 3, dadurch gekennzeichnet, daß die Verstärkungskorde der nicht zusammenhängenden Lagen (21, 22; 23, 24) ein aromatisches Polyamid aufweisen.

**Revendications**

1. Bandage pneumatique radial (10) pour avion comprenant deux parties annulaires de talons (11, 12) contenant chacune une tringle annulaire (25), un flanc (13, 14) s'étendant radialement vers l'extérieur à partir de chaque partie de talon (11, 12), ainsi que des nappes au sommet (15) s'étendant entre les flancs avec une partie de bande de roulement (16) s'engageant sur le sol et s'étendant circonférentiellement tout autour, cette partie de bande de roulement (16) comportant plusieurs rainures rectilignes espacées axialement et s'étendant circonférentiellement, une carcasse constituée de deux couches radiales renforcées (18, 19) et une structure (26) de ceinture de renforcement de bande de roulement disposée radialement vers l'extérieur des couches de carcasse (18, 19) dans la partie des nappes au sommet (15), chacune de ces couches de carcasse (18, 19) comprenant deux nappes discontinues (21, 22; 23, 24) de câblés de renforcement radiaux, chaque nappe discontinue étant ancrée autour d'une de ces tringles (25) et s'étendant à travers un flanc (13, 14) pour parvenir dans la partie des nappes au sommet (15) en relation de chevauchement avec la structure (26) de ceinture de renforcement de la bande de roulement, caractérisé en ce que les nappes de la carcasse chevauchent la structure (26) de ceinture de renforcement de la bande de roulement sur une distance égale à au moins un quart de la largeur axiale (X) de la structure (26) de ceinture de renforcement de la bande de roulement, les deux nappes discontinues de chaque couche (21, 22; 23, 24) de la carcasse ayant un espace libre axial (27, 28) d'une largeur axiale ne dépassant pas 10% de la largeur axiale (X) de la structure (26) de ceinture de renforcement de la bande de roulement, les couches de carcasse (18, 19) étant disposées de telle sorte que l'espace libre axial (27, 28) entre les nappes discontinues de chaque couche soit axialement décalé de et ne chevauche pas l'espace libre axial ménagé entre les nappes discontinues de l'autre couche de carcasse, tandis que les espaces libres axiaux (27, 28) ménagés entre les nappes discontinues (21, 22; 23, 24) de chaque couche de carcasse (18, 19) sont espacés axialement de la ligne centrale axiale (C-C) des rainures (29) pratiquées dans la partie de bande de roulement (16), d'une distance (Z) égale à au moins 2% de la largeur axiale (X) de la structure (26) de ceinture de renforcement de la bande de roulement.

2. Bandage pneumatique radial (10) selon la revendication 1, caractérisé en ce que l'espace libre axial ménagé entre les nappes discontinues d'une couche de carcasse est décalé axialement par rapport à l'espace libre axial ménagé entre les nappes discontinues de chaque autre couche de carcasse, d'une distance égale à, mais non inférieure à un quart de la largeur axiale (X) de la structure (26) de la ceinture de renforcement de bande de roulement.

3. Bandage pneumatique radial selon la revendication 1, caractérisé en ce que l'espace libre axial ménagé entre les nappes discontinues d'une couche de carcasse est décalé axialement par rapport à l'espace libre axial ménagé entre les nappes discontinues de chaque autre couche de carcasse, d'une distance comprise entre 30 et 37% de la largeur axiale (X) de la structure (26) de ceinture de renforcement de la bande de roulement.

4. Bandage pneumatique radial selon l'une quelconque des revendications 1, 2 ou 3, caractérisé en ce que les espaces libres axiaux (27, 28) ménagés entre les nappes discontinues des couchea de carcasse (18, 19) ont la même largeur axiale, les largeurs axiales de ces espaces libres ne dépassant pas 4% de la largeur axiale (X) de la structure (26) de la ceinture de renforcement de la bande de roulement.

5. Bandage pneumatique radial selon l'une quelconque des revendications 1, 2 ou 3, caractèrisé en ce que les câblés de renforcement des nappes discontinues (21, 22; 23, 24) sont constitués d'un polyamide aromatique.